# EUROPEAN PATENT SPECIFICATION

(11) **EP 3 132 064 B1**
(45) Date of publication and mention of the grant of the patent: **15.08.2018**
(21) Application number: 15723544.1
(22) Date of filing: 16.04.2015
(51) Int. Cl.: C22B 15/00

(54) **METHOD FOR PRODUCING CATHODE COPPER**
VERFAHREN ZUR HERSTELLUNG EINES KATHODENKUPFERS
PROCÉDÉ DE PRODUCTION DE CUIVRE DE CATHODE

(30) Priority: 17.04.2014 FI 20145367
(43) Date of publication of application: 22.02.2017
(73) Proprietor: Outotec (Finland) Oy, 02230 Espoo (FI)
(72) Inventor: JAATINEN, Akusti, FI-02340 Espoo (FI)
(74) Representative: Boco IP Oy Ab
(86) International application number: PCT/FI2015/050262
(87) International publication number: WO 2015/158963

(56) References cited:
- WO-A1-2004/005822
- WO-A1-2013/186440
- JP-A- H0 978 151
- JP-A- 2000 239 883

## Description

### Field of the invention

The invention relates to a method for producing cathode copper as defined in the preamble of independent claim 1.

A known production method for production of cathode copper, having a purity of more than 99.9 %, from copper concentrate involves firstly smelting sulfidic copper concentrate in first pyrometallurgical phase in a first suspension smelting furnace by partial oxidation of the copper concentrate to obtain a copper matte phase that is further oxidized in a second pyrometallurgical phase in a second suspension smelting furnace to metallic copper i.e. blister copper. A production method using a first and a second suspension smelting furnace is sometimes named a double flash process. Alternatively, sulfidic copper concentrate may be directly smelted to metallic copper i.e. blister copper in a direct-to-blister process in one single pyrometallurgical phase that is performed in one single suspension smelting furnace. In both alternatives, the blister copper obtained is further refined in anode furnaces by fire-refining to obtain molten anode copper, which is poured into anode molds to cast copper anodes. This known production method for production of cathode copper involves additionally further subjecting cast anodes to electrolytic refining in electrolytic cells to produce cathode copper.

Anode scrap is obtained in the production of cathode copper in two stages. Spent cast anodes from electrolytic refining constitute the primary source for anode scrap. In addition, some of the cast anodes produced in the anode casting step do not meet certain quality requirements and are therefore rejected. Spent cast anodes and rejected cast anodes contains in terms of mass percentages approximately 99 % copper and this is about 15 to 20 % of total mass of the primary copper produced. Therefore this material must be recycled.

Traditionally, in smelters that utilize Peirce-Smith (PS) converting, the spent cast anodes and the rejected cast anodes have been fed to the PS-converters. It is easy to feed the spent cast anodes and the rejected cast anodes there and the excess heat produced by the converting reactions is more than enough for melting the spent cast anodes and the rejected cast anodes.

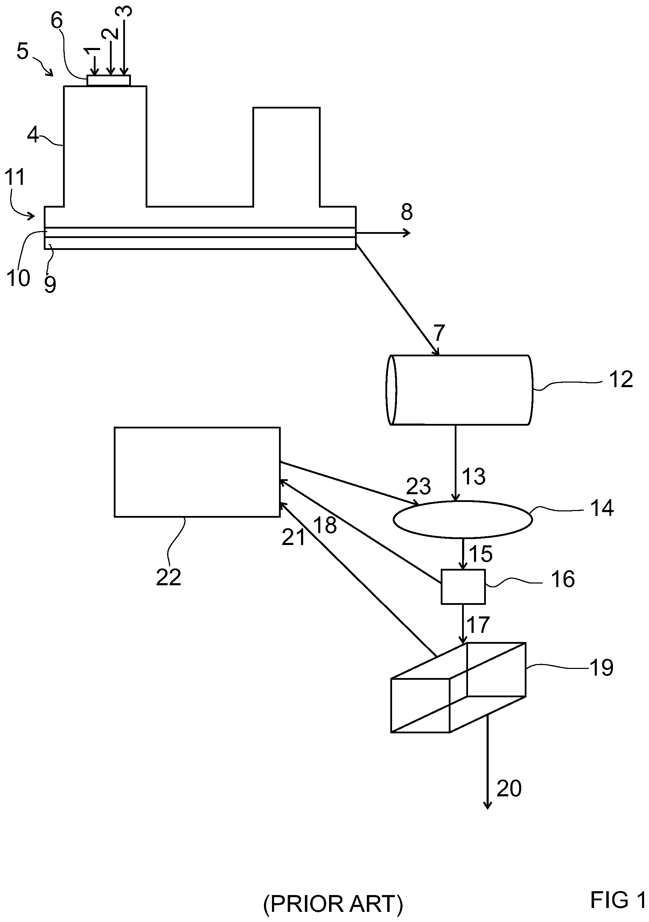

In modern suspension smelting furnaces such as in double flash and direct-to-blister furnaces, the option to feed anode scrap to converters are not available, as these furnaces are not Peirce-Smith converters. The usual solution has therefore to provide a separate furnace for smelting spent cast anodes and rejected cast anodes by using heat from burning fossil fuels. Figure 1 shows an example of a method according to the prior art, which method involves direct-to-blister smelting.

The method for producing anode copper shown in figure 1 comprises a smelting step including feeding feeding sulfidic copper bearing material 1, oxygen-bearing reaction gas 2 and slag-forming material 3 such as flux into a reaction shaft 4 of a suspension smelting furnace 5 by means of a burner 6 that is arranged at a top of the reaction shaft 4 of the suspension smelting furnace 5, whereby feeding sulfidic copper bearing material 1, oxygen-bearing reaction gas 2 and slag-forming material 3 react in the reaction shaft 4 into blister copper 7 and slag. Blister copper 7 and slag 8 is collected in a settler 11 of the suspension smelting furnace 5 to form a blister layer 9 containing blister copper 7 and a slag layer 10 containing slag 8 on top of the blister layer 9 in the settler 11 of the suspension smelting furnace 5.

The method shown in figure 1 comprises a fire refining step including feeding blister copper 7 obtained in the smelting step into an anode furnace 12 and fire-refining blister copper in the anode furnace 12 to produce molten anode copper 13 in the anode furnace.

The method shown in figure 1 comprises an anode casting step including feeding anode copper 13 obtained in the fire refining step into anode casting molds 14 to produce cast anodes 15.

The method shown in figure 1 comprises a quality checking step 16 for dividing the cast anodes 15 obtained in the anode casting step into accepted cast anodes 17 and rejected cast anodes 18.

The method shown in figure 1 comprises an electrolytic refining step for subjecting accepted cast anodes 17 to electrolytic refining in an electrolytic cell 19 to produce cathode copper 20, and as a by-product, spent cast anodes 21.

The method shown in figure 1 comprises a recycling step for recycling anode copper of rejected cast anodes 18 and anode copper of spent cast anodes 21. More precisely, the recycling step of the method according to the prior art method shown in figure 1 comprises feeding rejected cast anodes 18 and spent cast 21 into a separate scrap melting furnace 22 for smelting rejected cast anodes 18 and spent cast anodes 21 in the scrap melting furnace 22 and feeding copper anode smelt 23 from the scrap melting furnace 22 into anode casting molds 14 to produce cast anodes 15.

In the solution shown in figure 1, rejected cast anodes 18 and spent cast anodes 21 are melted in the shaft furnace 22 to make new cast anodes 15 of the material of rejected cast anodes 18 and spent cast anodes 21. This is a simple solution that achieves the goal of recovering the copper from of rejected cast anodes 18 and spent cast anodes 21. The disadvantages of a such prior art solution are the expenses to build and to operate the separate scrap melting furnace 22. Also from energy consumption and greenhouse gas emission point of view, this known solution cannot be considered to be good.

Publication WO 2013/186440 A1 presents a method and an arrangement for refining copper concentrate.

Publication JP 2000 239883 A presents a method for recycling anode returning material for casting, and the like, in copper refining, and charging device of anode returning material for casting, and the like, into refining furnace.

Publication JP H09 781 51 A presents a recycle method of valuable metals from scraps.

Publication WO 2004/005822 A1 presents a method and an arrangement for feeding an anode into a smelter.

### Objective of the invention

The object of the invention is to provide an efficient method for refining copper concentrate.

### Short description of the invention

The method for refining copper concentrate of the invention is characterized by the definitions of independent claim 1.

Preferred embodiments of the method are defined in the dependent claims.

The invention is based on using the excess thermal energy produced in the reactions in the suspension smelting furnace to smelt rejected cast anodes and spent cast anodes. In suspension smelting processes such as in double flash and direct-to-blister process, there is often a surplus of heat produced in the oxidation reactions in the suspension smelting furnaces, meaning that the reactions produce more heat than is required for smelting the copper concentrate. This is especially true with declining ore grades, since a decline in copper grade is usually accompanied by and incline in Fe and S contents, resulting in more reaction heat. Quite often the excess of thermal energy can even be a problem, causing a bottleneck in the suspension smelting furnace. In such case the objective of the invention is both to recycle the anode scrap efficiently and to absorb excess heat in the reaction shaft.

More precisely, in the method rejected cast anodes and spent cast anodes are mechanically broken to produce anode copper grain of rejected cast anodes and spent cast anodes, and the anode copper grain is fed into the reaction shaft of the suspension smelting furnace. The goal is that the anode copper grains are smelted on their way down from the upper part of the reaction shaft of the suspension smelting furnace to the settler of the suspension smelting furnace and not in the settler of the suspension smelting furnace. For this reason, the anode copper grain is preferably, but not necessarily, fed from the roof structure of the reaction shaft into the reaction shaft to enable sufficient time for the copper grains in the reaction shaft to melt. Even if the goal of melting the anode scrap in the reaction shaft is not completely reached, the anode copper grain will be significantly heated in the reaction shaft, thus lowering the cooling effect that melting it will have on the furnace settler.

If the suspension smelting furnace is run with reduced oxygen enrichment to counter the extra heat in the copper concentrate, the heat for smelting the anode scrap may be provided by increasing the oxygen enrichment in the suspension smelting furnace. This increases the technical oxygen consumption. In locations where oxygen is significantly cheaper than natural gas, this is a significant saving in operation costs. Consuming oxygen is also more sustainable than burning fossil fuels considering both the environmental impact and the availability of Earth's finite resources. Utilizing higher oxygen enrichment also results in smaller volume of gas in the suspension smelting process, reducing certain costs of the process.

If there is extra thermal energy in the copper concentrate, but the burner needs to be run with maximum oxygen enrichment because of bottlenecks in the off-gas line, absorbing the heat of the concentrate can be a limiting factor for the rate of production. In this case, smelting anode scrap will not result in increased energy consumption of any form in the suspension smelting furnace. On contrary, the cooling effect introduced can help in increasing the production rate in the suspension smelting furnace.

### List of figures

In the following the invention will described in more detail by referring to the figures, of which
Figure 1 is a schematic illustration showing the principle of a method according to the prior art
Figure 2 is a schematic illustration showing the principle of a first embodiment of the method,
Figure 3 is a schematic illustration showing a second embodiment of the method,
Figure 4 is a schematic illustration showing the principle of a third embodiment of the method,
Figure 5 is a schematic illustration showing a fourth embodiment of the method, and
Figure 6 is a schematic illustration showing a fifth embodiment of the method.

### Detailed description of the invention

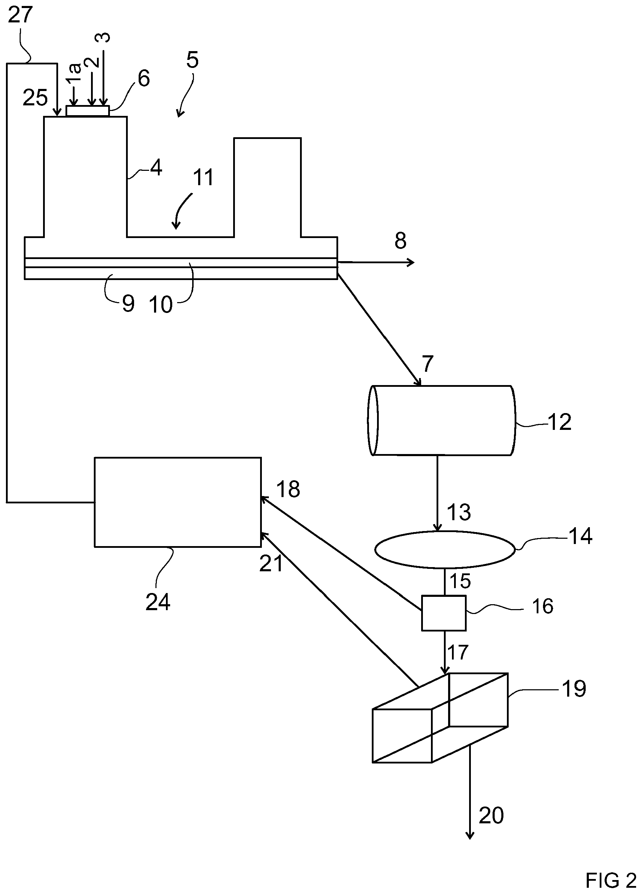

Figures 2 to 6 show some embodiments of the method for producing cathode copper.

The method comprises a smelting step including feeding sulfidic copper bearing material 1; 1a, 1b such as sulfidic copper concentrate 1a or finely-ground copper matte 1b and additionally oxygen-bearing reaction gas 2 and slag-forming material 3 such as flux into a reaction shaft 4 of a suspension smelting furnace 5; 5a, 5b by means of a burner 6 that is arranged at a top of the reaction shaft 4 of the suspension smelting furnace 5; 5a, 5b.

In the smelting step of the method, sulfidic copper bearing material 1, oxygen-bearing reaction gas 2 and slag-forming material 3 react in the reaction shaft 4 of the suspension smelting furnace 5; 5a, 5b into blister copper 7 and slag 8, and blister copper 7 and slag 8 is collected in a settler 11 of the suspension smelting furnace 5to form a blister layer 9 containing blister copper 7 and a slag layer 10 containing slag 8 on top of the blister layer 9 in the settler 11 of the suspension smelting furnace 5; 5a, 5b.

The method comprises additionally a fire refining step including feeding blister copper 7 obtained in the smelting step into an anode furnace 12 and fire-refining blister copper 7 in the anode furnace 12 producing molten anode copper 13 in the anode furnace 12.

The method comprises additionally an anode casting step including feeding molten anode copper 13 obtained in the fire refining step into anode casting molds 14 to produce cast anodes 15.

The method comprises additionally a quality checking step 16 for dividing cast anodes 15 obtained in the anode casting step into accepted cast anodes 17 and rejected cast anodes 18.

The method comprises additionally an electrolytic refining step including subjecting accepted cast anodes 17 to electrolytic refining in an electrolytic cell 19 to produce cathode copper 20 and as a by-product, spent cast anodes 21.

The method comprises additionally a recycling step for recycling anode copper of rejected cast anodes 18 and anode copper of spent cast anodes 21.

The recycling step includes feeding rejected cast anodes 18 and spent cast anodes 21 into a mechanical breaker 24 such as a shredder for mechanically breaking the rejected cast anodes 18 and spent cast anodes 21 to produce anode copper grain 25, and feeding anode copper grain 25 into the reaction shaft 4 of the suspension smelting furnace 5; 5a, 5b by means of copper grain feeding means 27.

The method may include feeding anode copper grain 25 into the reaction shaft 4 of the suspension smelting furnace 5; 5a, 5b at a distance from the burner 6.

The method may include feeding anode copper grain 25 into the reaction shaft 4 of the suspension smelting furnace 5; 5a, 5b through the burner 6.

The method may include feeding anode copper grain 25 into the reaction shaft 4 of the suspension smelting furnace 5; 5a, 5b from the top of the reaction shaft 4 of the suspension smelting furnace 5; 5a, 5b.

The method may include feeding anode copper grain 25 into the reaction shaft 4 of the suspension smelting furnace 5; 5a, 5b at a feeding that is situated between a connection point between the settler 11 and the reaction shaft 4 and the top of the reaction shaft 4, i.e. at a feeding that is situated at a vertical level between a connection point between the settler 11 and the reaction shaft 4 and the top of the reaction shaft 4.

The method may include feeding additionally inert gas such as nitrogen 26 into the reaction shaft 4 of the suspension smelting furnace 5; 5a, 5b to prevent hot gases from the suspension smelting furnace 5; 5a, 5b from entering the copper grain feeding means 27.

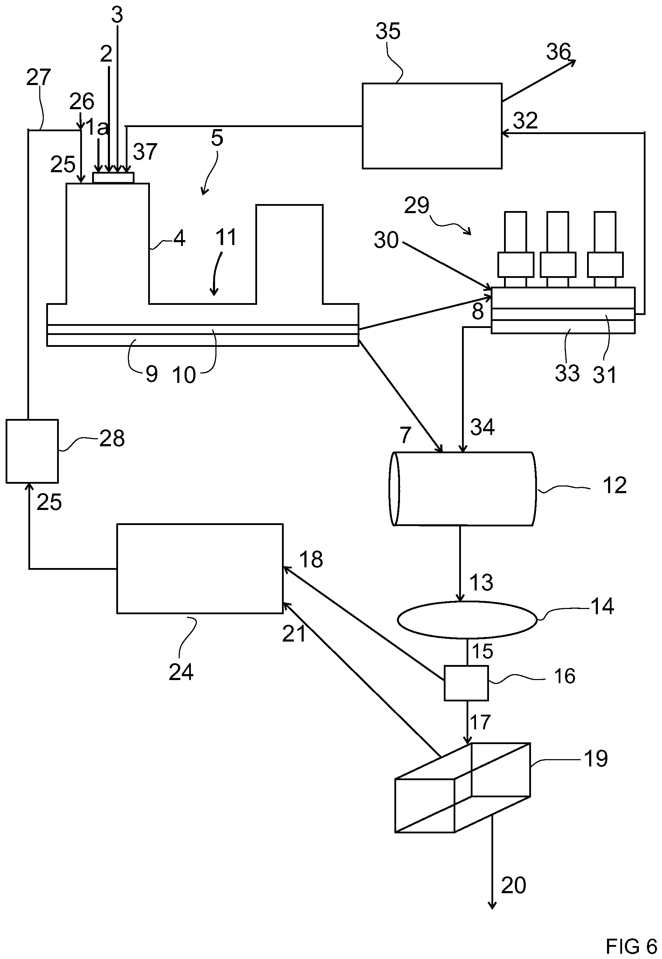

The method may include a drying step for drying anode copper grain 25 in a drying means 28 prior feeding anode copper grain 25 into the reaction shaft 4 of the suspension smelting furnace 5, as shown in the embodiment illustrated in figure 6.

The method may include a pre-heating step for pre-heating anode copper grain 25 in a heating means (not shown in the figures) prior feeding anode copper grain 25 into the reaction shaft 4 of the suspension smelting furnace 5.

The method may include using a screw feeder for feeding anode copper grain 25 into the suspension smelting furnace 5

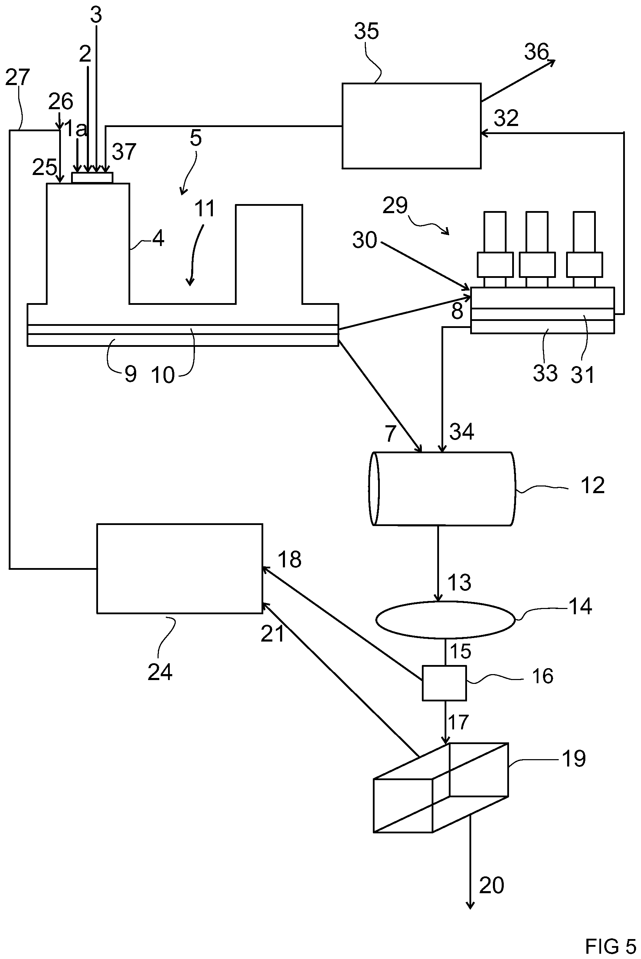

In the fourth and the fifth embodiment illustrated in figures 5 and 6, the method comprises feeding slag 8 obtained in the first smelting step into a slag cleaning electric furnace 29. The fourth and the fifth embodiment of the method comprises a slag treating step for treating slag 8 in the slag cleaning electric furnace 29 with reduction agent 30 fed in the slag cleaning electric furnace 29 to produce an electric furnace slag layer 31 containing electric furnace slag 32 and an electric furnace blister copper layer 33 containing electric furnace blister copper 34. The fourth and the fifth embodiments of the method comprise feeding electric furnace blister copper 34 obtained in the slag treating step into an anode furnace 12. The fourth and the fifth embodiment of the method comprise feeding electric furnace slag 32 obtained in the slag threating step to a final slag cleaning means 35. The fourth and the fifth embodiment of the method comprise a final slag cleaning step for subjecting electric furnace slag 32 to final slag cleaning treatment to produce waste slag 36 and slag concentrate or other copper containing material 37 of electric furnace slag 32. The fourth and the fifth embodiment of the method comprises feeding slag concentrate or other copper containing material 37 obtained in the flotation step into the reaction shaft 4 of the suspension smelting furnace 5.

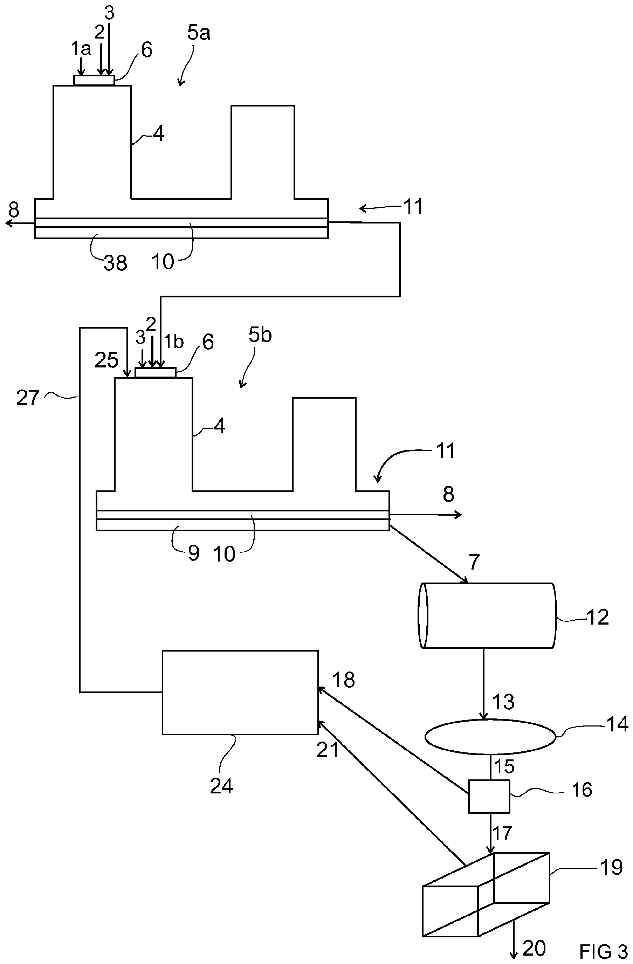

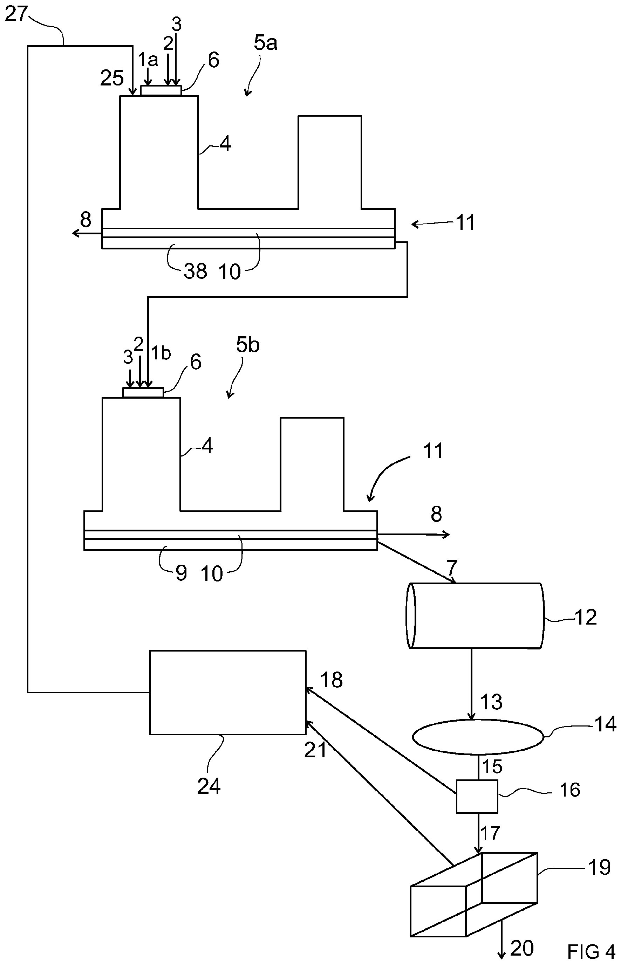

The second embodiment illustrated in figure 3 and the third embodiment illustrated in figure 4 are so-called double flash methods, whereas the first embodiment illustrated in figure 2, the fourth embodiment illustrated in figure 5, and the fifth embodiment illustrated in figure 6 are direct-to-blister methods. It is obvious for one skilled in the art that the embodiments illustrated in figures 2, 5 or 6 could employ a first suspension smelting furnace 5a and a second suspension smelting furnace 5b as illustrated in figures 3 and 4 and that anode copper grain 25 could be fed into at least one of the first suspension smelting furnace 5a and the second suspension smelting furnace 5b as illustrated in figures 3 and 4.

The first embodiment, the fourth embodiment, and the fifth embodiment illustrated in figure 2, 5 and 6 comprises so-called direct-to-blister smelting in the suspension smelting furnace 5. In the first embodiment, in the fourth embodiment, and in the fifth embodiment illustrated in figure 2, 5 and 6, the smelting step includes feeding sulfidic copper bearing material in the form of copper sulphide concentrate 1a, oxygen-bearing reaction gas 2 and slag-forming material 3 into a reaction shaft 4 of a suspension smelting furnace 5 by means of a burner 6 that is arranged at a top of the reaction shaft 4 of the suspension smelting furnace 5. Copper sulphide concentrate 1a, oxygen-bearing reaction gas 2 and slag-forming material 3 react in the reaction shaft 4 of the suspension smelting furnace 5 into blister copper and slag 8. Matte 1b and slag 8 is collected in a settler 11 of the suspension smelting furnace 5 to form a matte layer 38 containing matte 1b and a slag layer 10 containing slag 8 on top of the matte layer 38 in the settler 11 of the suspension smelting furnace 5a

The second embodiment and the third embodiment illustrated in figure 3 and 3 comprises so-called double flash smelting. In the second and in the third embodiment illustrated in figures 3 and 4, the smelting step includes a first smelting step comprising feeding copper sulphide concentrate 1a, oxygen-bearing reaction gas 2 and slag-forming material 3 into a reaction shaft 4 of a first suspension smelting furnace 5a by means of a burner 6 that is arranged at a top of the reaction shaft 4 of the first suspension smelting furnace 5a. Copper sulphide concentrate 1a, oxygen-bearing reaction gas 2 and slag-forming material 3 react in the reaction shaft 4 of the first suspension smelting furnace 5 into matte 1b and slag 8. Matte 1b and slag 8 is collected in a settler 11 of the first suspension smelting furnace 5 to form a matte layer 38 containing matte 1b and a slag layer 10 containing slag 8 on top of the matte layer 38 in the settler 11 of the first suspension smelting furnace 5a.

In the second and the third embodiment illustrated in figures 3 and 4, the smelting step includes additionally a second smelting step comprising feeding matte 1b obtained in the first smelting step, oxygen-bearing reaction gas 2 and slag-forming material 3 into a reaction shaft 4 of a second suspension smelting furnace 5b by means of a burner 6 that is arranged at a top of the reaction shaft 4 of the second suspension smelting furnace 5b. Matte 1b, oxygen-bearing reaction gas 2 and slag-forming material 3 react in the reaction shaft 3 of the second suspension smelting furnace 5b into blister copper 7 and slag 8. Blister copper 7 and slag 8 is collected in a settler 11 of the second suspension smelting furnace 5 to form a layer containing blister copper 7 and a slag layer 10 containing slag 8 on top of the layer in the settler 11 of the second suspension smelting furnace 5.

In the second embodiment illustrated in figure 3, anode copper grain 25 is in the recycling step fed into the reaction shaft 4 of the second suspension smelting furnace 5b.

In the third embodiment illustrated in figure 4, anode copper grain 25 is in the recycling step fed into the reaction shaft 4 of the first suspension smelting furnace 5a. In this method the anode copper grain 25 will have an effect on the requirement of oxygen-bearing reaction gas 2 which has to be taken into account in controlling the process.

It is apparent to a person skilled in the art that as technology advances, the basic idea of the invention can be implemented in various ways. The invention and its embodiments are therefore not restricted to the above examples, but they may vary within the scope of the claims.

## Claims

1. A method for producing cathode copper, wherein the method comprises
a smelting step including feeding sulfidic copper bearing material (1; 1a, 1b) such as sulfidic copper concentrate (1a) or finely ground copper matte (1b) and additionally oxygen-bearing reaction gas (2) and slag-forming material (3) into a reaction shaft (4) of a suspension smelting furnace (5; 5a, 5b) by means of a burner (6) that is arranged at a top of the reaction shaft (4) of the suspension smelting furnace (5; 5a, 5b), whereby sulfidic copper bearing material (1; 1a, 1b), oxygen-bearing reaction gas (2) and slag-forming material (3) react in the reaction shaft (4) of the suspension smelting furnace (5; 5a) into blister copper (7) and slag (8), and collecting blister copper (7) and slag (8) in a settler (11) of the suspension smelting furnace (5; 5a, 5b) to form a blister layer (9) containing blister copper (7) and a slag layer (10) containing slag (8) on top of the blister layer (9) in the settler (11) of a suspension smelting furnace (5; 5a, 5b),
a fire refining step including feeding blister copper (7) obtained in the smelting step into an anode furnace (12) and fire-refining blister copper (7) in the anode furnace (12) producing molten anode copper (13) in the anode furnace (12),
an anode casting step including feeding molten anode copper (13) obtained in the fire refining step into anode casting molds (14) to produce cast anodes (15),
a quality checking step (16) for dividing cast anodes (15) obtained in the anode casting step into accepted cast anodes (17) and rejected cast anodes (18),
an electrolytic refining step including subjecting accepted cast anodes (17) to electrolytic refining in an electrolytic cell (19) to produce cathode copper (20) and as a by-product, spent cast anodes (21), and
a recycling step for recycling anode copper of rejected cast anodes (18) and anode copper of spent cast anodes (21),
**characterized**
**by** the recycling step including feeding rejected cast anodes (18) and spent anodes into a mechanical breaker (24) for mechanically breaking rejected cast anodes (18) and spent cast anodes (21) to produce anode copper grain (25) and feeding anode copper grain (25) into the reaction shaft (4) of the suspension smelting furnace (5; 5a, 5b) by means of copper grain feeding means (27).

2. The method according to claim 1, **characterized by** feeding anode copper grain (25) into the reaction shaft (4) of the suspension smelting furnace (5; 5a, 5b) at a distance from the burner (6).

3. The method according to claim 1 or 2, **characterized by** feeding anode copper grain (25) into the reaction shaft (4) from the top of the reaction shaft (4) of the suspension smelting furnace (5; 5a, 5b).

4. The method according to any of the claims 1 to 3, **characterized by** feeding anode copper grain (25) into the reaction shaft (4) of the suspension smelting furnace (5; 5a, 5b) at a feeding that is situated between a connection point between the settler (11) and the reaction shaft (4) and the top of the reaction shaft (4)

5. The method according to claim 1, **characterized by** feeding anode copper grain (25) into the reaction shaft (4) of the suspension smelting furnace (5; 5a, 5b) with the burner (6).

6. The method according to any of the claims 1 to 5, **characterized by** feeding additionally inert gas such as nitrogen (26) into the reaction shaft (4) of the suspension smelting furnace (5; 5a, 5b) to prevent hot gases from the suspension smelting furnace (5; 5a, 5b) from entering the copper grain feeding means (27).

7. The method according to any of the claims 1 to 6, **characterized by** a drying step for drying anode copper grain (25) in a drying means (28) prior feeding anode copper grain (25) into the reaction shaft (4) of the suspension smelting furnace (5).

8. The method according to any of the claims 1 to 7, **characterized by** using a screw feeder for feeding anode copper grain (25) into the suspension smelting furnace (5).

9. The method according to any of the claims 1 to 8, **characterized**
**by** feeding slag (8) obtained in the smelting step into a slag cleaning electric furnace (29),
by a slag treating step for treating slag (8) in the slag cleaning electric furnace (29) with reduction agent (30) to in the slag cleaning electric furnace (29) produce an electric furnace slag layer (31) containing electric furnace slag (32) and an electric furnace blister copper layer (33) containing electric furnace blister copper (34),
by feeding electric furnace blister copper (34) obtained in the slag threating step into an anode furnace (12),
by feeding electric furnace slag (32) obtained in the slag threating step to a floatation means (35),
by a floatation step for subjecting electric furnace slag (32) to flotation treatment to produce waste slag (36) and slag concentrate (37) of electric furnace slag (32), and
by feeding slag concentrate (37) obtained in the flotation step into the reaction shaft (4) of the suspension smelting furnace (5).

10. The method according to any of the claims 1 to 9, **characterized**
**by** the smelting step includes a first smelting step comprising feeding copper sulphide concentrate (1a), oxygen-bearing reaction gas (2) and slag-forming material (3) into a reaction shaft (4) of a first suspension smelting furnace (5a) by means of a burner (6) that is arranged at a top of the reaction shaft (4) of the first suspension smelting furnace (5), whereby copper sulphide concentrate (1), oxygen-bearing reaction gas (2) and slag-forming material (3) react in the reaction shaft (4) of the first suspension smelting furnace (5) into matte and slag (8), and colleting matte and slag (8) in a settler (11) of the first suspension smelting furnace (5) to form a matte layer containing matte and a slag layer (10) containing slag (8) on top of the layer in the settler (11) of the first suspension smelting furnace (5), and
by the smelting step includes a second smelting step comprising feeding matte (1b) obtained in the first smelting step, oxygen-bearing reaction gas (2) and slag-forming material (3) into a reaction shaft (4) of a second suspension smelting furnace (5b) by means of a burner (6) that is arranged at a top of the reaction shaft (4) of the second suspension smelting furnace (5), whereby matte, oxygen-bearing reaction gas (2) and slag-forming material (3) react in the reaction shaft (4) of the second suspension smelting furnace (5) into blister copper (7) and slag (8), and colleting blister copper (7) and slag (8) in a settler (11) of the second suspension smelting furnace (5) to form a layer containing blister copper (7) and a slag layer (10) containing slag (8) on top of the layer in the settler (11) of the second suspension smelting furnace (5).

11. The method according to claim 10, **characterized by** feeding anode copper grain (25) in the recycling step into the reaction shaft (4) of the first suspension smelting furnace (5a).

12. The method according to claim 10 or 11, **characterized by** feeding anode copper grain (25) in the recycling step into the reaction shaft (4) of the second suspension smelting furnace (5b).

## Patentansprüche

1. Verfahren zur Herstellung von Kathodenkupfer, wobei das Verfahren umfasst:
einen Schmelzschritt umfassend: Eintragen von schwefelkupferhaltigem Material (1; 1a, 1b) wie Schwefelkupferkonzentrat (1a) oder feingemahlenem Kupferstein (1b) und zusätzlich sauerstoffhaltigem Reaktionsgas (2) und schlackebildendem Material (3) in einen Reaktionsschacht (4) eines Suspensionsschmelzofens (5; 5a, 5b) mittels eines Brenners (6), der am Kopf des Reaktionsschachtes (4) des Suspensionsschmelzofens (5; 5a, 5b) angeordnet ist, wobei schwefelkupferhaltiges Material (1; 1a, 1b), sauerstoffhaltiges Reaktionsgas (2) und schlackebildendes Material (3) im Reaktionsschacht (4) des Suspensionsschmelzofens (5; 5a) zu Blisterkupfer (7) und Schlacke (8) reagieren, und Sammeln von Blisterkupfer (7) und Schlacke (8) in einem Absetzbehälter (11) des Suspensionsschmelzofens (5; 5a, 5b), um eine Blisterkupfer (7) enthaltende Blisterschicht (9) und oben auf der Blisterschicht (9) eine Schlacke (8) enthaltende Schlackenschicht (10) im Absetzbehälter (11) eines Suspensionsschmelzofens (5; 5a, 5b) auszubilden,
einen Feuerraffinationsschritt umfassend: Eintragen von im Schmelzschritt gewonnenem Blisterkupfer (7) in einen Anodenofen (12) und Feuerraffinieren von Blisterkupfer (7) im Anodenofen (12) zum Herstellen von geschmolzenem Anodenkupfer (13) im Anodenofen (12),
einen Anodengießschritt umfassend: Eintragen von im Feuerraffinationsschritt gewonnenem geschmolzenem Anodenkupfer (13) in Anodengussformen (14) zum Herstellen von Gussanoden (15),
einen Qualitätsprüfungsschritt (16) zum Aufteilen der im Anodengießschritt erzeugten Gussanoden (15) in angenommene Gussanoden (17) und verworfene Gussanoden (18),
einen Elektroraffinationsschritt umfassend: Unterziehen der angenommenen Gussanoden (17) einer elektrolytischen Raffination in einer elektrolytischen Zelle (19) zur Herstellung von Kathodenkupfer (20) und, als Beiprodukt, verbrauchten Gussanoden (21), und
einen Recycling-Schritt zum Zurückführen von Anodenkupfer der verworfenen Gussanoden (18) und Anodenkupfer der verbrauchten Gussanoden (21),
**gekennzeichnet dadurch, dass**
der Recycling-Schritt umfasst: Eintragen von verworfenen Gussanoden (18) und verbrauchten Gussanoden in einen mechanischen Brecher (24) zum mechanischen Brechen der verworfenen Gussanoden (18) und verbrauchten Gussanoden (21) zur Herstellung von Anodenkupfergranulat (25) und Eintragen von Anodenkupfergranulat (25) in den Reaktionsschacht (4) des Suspensionsschmelzofens (5; 5a, 5b) über Kupfergranulat-Eintragsmittel (27).

2. Verfahren nach Anspruch 1, **gekennzeichnet durch** Eintragen von Anodenkupfergranulat (25) in den Reaktionsschacht (4) des Suspensionsschmelzofens (5; 5a, 5b) in einer Entfernung vom Brenner (6).

3. Verfahren nach Anspruch 1 oder 2, **gekennzeichnet durch** Eintragen von Anodenkupfergranulat (25) in den Reaktionsschacht (4) ausgehend vom Kopf des Reaktionsschachts (4) des Suspensionsschmelzofens (5; 5a, 5b).

4. Verfahren nach einem der Ansprüche 1 bis 3, **gekennzeichnet durch** Eintragen von Anodenkupfergranulat (25) in den Reaktionsschacht (4) des Suspensionsschmelzofens (5; 5a, 5b) an einem Eintragspunkt, der zwischen einer Verbindungsstelle von Absetzbehälter (11) und Reaktionsschacht (4) und dem Kopf des Reaktionsschachts (4) gelegen ist.

5. Verfahren nach Anspruch 1, **gekennzeichnet durch** Eintragen von Anodenkupfergranulat (25) in den Reaktionsschacht (4) des Suspensionsschmelzofens (5; 5a, 5b) mit dem Brenner (6).

6. Verfahren nach einem der Ansprüche 1 bis 5, **gekennzeichnet durch** zusätzliches Eintragen von Schutzgas wie Stickstoff (26) in den Reaktionsschacht (4) des Suspensionsschmelzofens (5; 5a, 5b), um zu vermeiden, dass Heißgase aus dem Suspensionsschmelzofen (5; 5a, 5b) in das Kupfergranulat-Eintragsmittel (27) eindringen.

7. Verfahren nach einem der Ansprüche 1 bis 6, **gekennzeichnet durch** einen Trocknungsschritt zum Trocknen von Anodenkupfergranulat (25) in einem Trocknungsmittel (28) vor dem Eintragen des Anodenkupfergranulats (25) in den Reaktionsschacht (4) des Suspensionsschmelzofens (5).

8. Verfahren nach einem der Ansprüche 1 bis 7, **gekennzeichnet durch** Verwenden einer Eintragsschnecke zum Eintragen von Anodenkupfergranulat (25) in den Suspensionsschmelzofen (5).

9. Verfahren nach einem der Ansprüche 1 bis 8, **gekennzeichnet**
**durch** das Eintragen von im Schmelzschritt gewonnener Schlacke (8) in einen Schlackereinigungs-Elektroofen (29),
durch einen Schlackebehandlungsschritt zum Behandeln von Schlacke (8) im Schlackereinigungs-Elektroofen (29) mit einem Reduktionsmittel (30), um im Schlackereinigungs-Elektroofen (29) eine Elektroofenschlacke (32) enthaltende Elektroofenschlackeschicht (31) und eine Elektroofen-Blisterkupfer (34) enthaltende Elektroofen-Blisterkupferschicht (33) zu erzeugen,
durch das Eintragen von im Schlackebehandlungsschritt gewonnenem Elektroofen-Blisterkupfer (34) in einen Anodenofen (12),
durch das Eintragen von im Schlackebehandlungsschritt gewonnener Elektroofenschlacke (32) in ein Flotationsmittel (35),
durch einen Flotationsschritt, um die Elektroofenschlacke (32) einer Flotationsbehandlung zu unterziehen, um Abfallschlacke (36) und ein Schlackenkonzentrat (37) von Elektroofenschlacke (32) zu erzeugen, und
durch das Eintragen des im Flotationsschritt gewonnenem Schlackenkonzentrats (37) in den Reaktionsschacht (4) des Suspensionsschmelzofens (5).

10. Verfahren nach einem der Ansprüche 1 bis 9, **gekennzeichnet dadurch, dass**
der Schmelzschritt einen ersten Schmelzschritt umfasst, welcher umfasst: Eintragen von Kupfersulfidkonzentrat (la), sauerstoffhaltigem Reaktionsgas (2) und schlackebildendem Material (3) in einen Reaktionsschacht (4) eines ersten Suspensionsschmelzofens (5a) mittels eines Brenners (6), der am Kopf des Reaktionsschachtes (4) des ersten Suspensionsschmelzofens (5) angeordnet ist, wobei Kupfersulfidkonzentrat (1), sauerstoffhaltiges Reaktionsgas (2) und schlackebildendes Material (3) im Reaktionsschacht (4) des ersten Suspensionsschmelzofens (5) zu Kupferstein und Schlacke (8) reagieren, und Sammeln von Kupferstein und Schlacke (8) in einem Absetzbehälter (11) des ersten Suspensionsschmelzofens (5), um eine Kupferstein enthaltende Kupfersteinschicht und oben auf der Schicht eine Schlacke (8) enthaltende Schlackenschicht (10) im Absetzbehälter (11) des ersten Suspensionsschmelzofens (5) auszubilden, und
der Schmelzschritt einen zweiten Schmelzschritt umfasst, welcher umfasst: Eintragen von im ersten Schmelzschritt gewonnenem Kupferstein (1b), sauerstoffhaltigem Reaktionsgas (2) und schlackebildendem Material (3) in einen Reaktionsschacht (4) eines zweiten Suspensionsschmelzofens (5b) mittels eines Brenners (6), der am Kopf des Reaktionsschachtes (4) des zweiten Suspensionsschmelzofens (5) angeordnet ist, wobei Kupferstein, sauerstoffhaltiges Reaktionsgas (2) und schlackebildendes Material (3) im Reaktionsschacht (4) des zweiten Suspensionsschmelzofens (5) zu Blisterkupfer (7) und Schlacke (8) reagieren, und Sammeln von Blisterkupfer (7) und Schlacke (8) in einem Absetzbehälter (11) des zweiten Suspensionsschmelzofens (5), um eine Blisterkupfer (7) enthaltende Schicht und oben auf der Schicht eine Schlacke (8) enthaltende Schlackenschicht (10) im Absetzbehälter (11) des zweiten Suspensionsschmelzofens (5) auszubilden.

11. Verfahren nach Anspruch 10, **gekennzeichnet durch** das Eintragen von Anodenkupfergranulat (25) im Recycling-Schritt in den Reaktionsschacht (4) des ersten Suspensionsschmelzofens (5a).

12. Verfahren nach Anspruch 10 oder 11, **gekennzeichnet durch** das Eintragen von Anodenkupfergranulat (25) im Recycling-Schritt in den Reaktionsschacht (4) des zweiten Suspensionsschmelzofens (5b).

## Revendications

1. Procédé de fabrication de cuivre cathodique, ledit procédé comprenant :
une étape de fusion consistant à introduire une matière contenant du cuivre sulfuré (1; 1a, 1b), telle qu'un concentré de cuivre sulfuré (1a) ou une matte de cuivre finement broyée (1b), et en outre un gaz réactionnel contenant de l'oxygène (2) et une matière formant des scories (3) dans une cuve de réaction (4) d'un four de fusion en suspension (5; 5a, 5b) au moyen d'un brûleur (6) qui est disposé à la partie supérieure de la cuve de réaction (4) du four de fusion en suspension (5; 5a, 5b), ladite matière contenant du cuivre sulfuré (1; 1a, 1b), ledit gaz réactionnel contenant de l'oxygène (2) et ladite matière formant des scories (3) réagissant dans la cuve de réaction (4) du four de fusion en suspension (5; 5a) pour former du cuivre blister (7) et des scories (8), et à collecter du cuivre blister (7) et des scories (8) dans un décanteur (11) du four de fusion en suspension (5; 5a, 5b) pour former une couche blister (9) contenant du cuivre blister (7) et, au-dessus de la couche blister (9), une couche scories (10) contenant des scories (8) dans le décanteur (11) d'un four de fusion en suspension (5; 5a, 5b),
une étape de raffinage au feu consistant à introduire dans un four à anodes (12) le cuivre blister (7) obtenus par l'étape de fusion et à raffiner au feu le cuivre blister (7) dans le four à anodes (12) pour produire du cuivre anodique fondu (13) dans le four à anodes (12),
une étape de coulée d'anodes consistant à introduire dans des moules de coulée d'anodes (14) le cuivre anodique fondu (13) obtenu par l'étape de raffinage au feu pour produire des anodes coulées (15),
une étape de contrôle de qualité (16) pour diviser les anodes coulées (15) obtenues par l'étape de coulée d'anodes (15) en anodes coulées acceptées (17) et anodes coulées rejetées (18),
une étape de raffinage électrolytique consistant à assujettir des anodes coulées acceptées (17) à un raffinage électrolytique dans une cellule électrolytique (19) pour produire du cuivre cathodique (20) et, comme sous-produit, des anodes coulées usées (21), et
une étape de recyclage pour recycler le cuivre anodique des anodes coulées rejetée (18) et le cuivre anodique des anodes coulées usées (21),
**caractérisé en ce que**
ladite étape de recyclage consiste à introduire des anodes coulées rejetées (18) et des anodes usées dans un concasseur mécanique (24) pour le concassage mécanique des anodes coulées rejetées (18) et des anodes coulées usées (21) pour produire des granules de cuivre anodique (25) et à introduire les granules de cuivre anodique (25) dans la cuve de réaction (4) du four de fusion en suspension (5; 5a, 5b) par le biais de moyens d'amenée de granules de cuivre (17).

2. Procédé selon la revendication 1, **caractérisé par** l'étape consistant à introduire des granules de cuivre anodique (25) dans la cuve de réaction (4) du four de fusion en suspension (5; 5a, 5b) à une distance par rapport au brûleur (6).

3. Procédé selon la revendication 1 ou 2, **caractérisé par** l'étape consistant à introduire des granules de cuivre anodique (25) dans la cuve de réaction (4) à partir de la partie supérieure de la cuve de réaction (4) du four de fusion en suspension (5; 5a, 5b).

4. Procédé selon l'une des revendications 1 à 3, **caractérisé par** l'étape consistant à introduire des granules de cuivre anodique (25) dans la cuve de réaction (4) du four de fusion en suspension (5; 5a, 5b) à un endroit situé entre un point de jonction entre le décanteur (11) et la cuve de réaction (4) et la partie supérieure de la cuve de réaction (4).

5. Procédé selon la revendication 1, **caractérisé par** l'étape consistant à introduire des granules de cuivre anodique (25) dans la cuve de réaction (4) du four de fusion en suspension (5; 5a, 5b) avec le brûleur (6).

6. Procédé selon l'une des revendications 1 à 5, **caractérisé par** l'étape consistant à introduire en outre un gaz inerte tel que l'azote (26) dans la cuve de réaction (4) du four de fusion en suspension (5; 5a, 5b) pour empêcher les gaz chauds en provenance du four de fusion en suspension (5; 5a, 5b) de pénétrer dans le moyen d'amenée de granules de cuivre (27).

7. Procédé selon l'une des revendications 1 à 6, **caractérisé par** une étape de séchage pour faire sécher les granules de cuivre anodique (25) dans un moyen de séchage (28) avant d'amener les granules de cuivre anodique (25) vers la cuve de réaction (4) du four de fusion en suspension (5).

8. Procédé selon l'une des revendications 1 à 7, **caractérisé par** l'utilisation d'une vis d'amenée pour introduire des granules de cuivre anodique (25) dans le four de fusion en suspension (5).

9. Procédé selon l'une des revendications 1 à 8, **caractérisé**
**en ce que** des scories (8) obtenues par l'étape de fusion sont introduites dans un four électrique de nettoyage de scories (29),
par une étape de traitement de scories consistant à traiter les scories (8) dans le four électrique de nettoyage de scories (29) par un agent réducteur (30) pour produire, dans le four électrique de nettoyage de scories (29), une couche scories de four électrique (31) contenant des scories de four électrique (32) et une couche cuivre blister de four électrique (33) contenant du cuivre blister de four électrique (34),
**en ce que** le cuivre blister de four électrique (34) obtenu par l'étape de traitement de scories est introduit dans un four à anodes (12),
**en ce que** les scories de four électrique (32) obtenues par l'étape de traitement de scories sont introduites dans un moyen de flottation (35),
par une étape de flottation consistant à assujettir les scories de four électrique (32) à un traitement de flottation pour produire des déchets de scories (36) et un concentré de scories (37) de scories de four électrique (32), et
**en ce que** le concentré de scories (37) obtenu par l'étape de flottation est introduit dans la cuve de réaction (4) du four de fusion en suspension (5).

10. Procédé selon l'une des revendications 1 à 9, **caractérisé en ce que**
l'étape de fusion comprend une première étape de fusion consistant à introduire un concentré de sulfure de cuivre (la), un gaz réactionnel contenant de l'oxygène (2) et une matière formant des scories (3) dans une cuve de réaction (4) d'un premier four de fusion en suspension (5a) au moyen d'un brûleur (6) qui est disposé à la partie supérieure de la cuve de réaction (4) du premier four de fusion en suspension (5), ledit concentré de sulfure de cuivre (1), ledit gaz réactionnel contenant de l'oxygène (2) et ladite matière formant des scories (3) réagissant dans la cuve de réaction (4) du premier four de fusion en suspension (5) pour former de la matte et des scories (8), et à collecter de la matte et des scories (8) dans un décanteur (11) du premier four de fusion en suspension (5) pour former une couche matte (9) contenant de la matte et, au-dessus de la couche, une couche scories (10) contenant des scories (8) dans le décanteur (11) du premier four de fusion en suspension (5), et
l'étape de fusion comprend une deuxième étape de fusion consistant à introduire la matte (1b) obtenue par la première étape de fusion, un gaz réactionnel contenant de l'oxygène (2) et une matière formant des scories (3) dans une cuve de réaction (4) d'un deuxième four de fusion en suspension (5b) au moyen d'un brûleur (6) qui est disposé à la partie supérieure de la cuve de réaction (4) du deuxième four de fusion en suspension (5), ladite matte, ledit gaz réactionnel contenant de l'oxygène (2) et ladite matière formant des scories (3) réagissant dans la cuve de réaction (4) du deuxième four de fusion en suspension (5) pour former du cuivre blister (7) et des scories (8), et à collecter du cuivre blister (7) et des scories (8) dans un décanteur (11) du deuxième four de fusion en suspension (5) pour former une couche contenant du cuivre blister (7) et, au-dessus de la couche, une couche scories (10) contenant des scories (8) dans le décanteur (11) du deuxième four de fusion en suspension (5).

11. Procédé selon la revendication 10, **caractérisé en ce que**, dans l'étape de recyclage, les granules de cuivre anodique (25) sont introduits dans la cuve de réaction (4) du premier four de fusion en suspension (5a).

12. Procédé selon la revendication 10 ou 11, **caractérisé en ce que**, dans l'étape de recyclage, les granules de cuivre anodique (25) sont introduits dans la cuve de réaction (4) du deuxième four de fusion en suspension (5b).
